# EUROPEAN PATENT APPLICATION

(11) **EP 2 728 323 A1**
(43) Date of publication of application: **07.05.2014**
(21) Application number: 12801979.1
(22) Date of filing: 05.06.2012
(51) Int. Cl.: G01J 3/26, H04N 9/04

(54) **SPECTRAL IMAGE CAPTURING DEVICE**

(30) Priority: 21.06.2011 JP 2011137689
(71) Applicant: Olympus Corporation, Shibuya-ku Tokyo 151-0072 (JP)
(72) Inventor: MORISHITA Koki, Tokyo 151-0072 (JP)
(74) Representative: Gunzelmann, Rainer
(86) International application number: PCT/JP2012/064461
(87) International publication number: WO 2012/176616

(57) **Abstract**

In a spectral imaging apparatus which is provided with a variable wavelength spectroscopic element transmitting light so that transmitted light is light with a plurality of peak wavelengths in predetermined wavelength ranges and changing a distance between surfaces of a pair of optical substrates opposite to each other to change the peak wavelengths, the spectral imaging apparatus includes a light splitting unit which splits light transmitted by the variable wavelength spectroscopic element into components in each of the predetermined wavelength ranges and image-capturing units each of which captures only a spectral image formed by the components in each of the wavelength ranges into which the light transmitted by the variable wavelength spectroscopic element is split by the light splitting unit, the wavelength ranges including the peak wavelengths respectively, and the image-capturing units capture images respectively and simultaneously.

## Description

### Technical Field

This invention relates to a spectral imaging apparatus which is provided with a variable wavelength spectroscopic element that changes a distance between the surfaces of a pair of optical substrates opposite to each other to change peak wavelengths of transmitted light.

### Background Art

Up to now, a variable wavelength spectroscopic element has been known, which transmits light so that transmitted light is light having a plurality of peak wavelengths in predetermined wavelength ranges and which can optionally change the peak wavelengths. This variable wavelength spectroscopic element can be, for example, an air-gapped Fably-Perot etalon or the like. And, a spectral imaging apparatus provided with such a variable wavelength spectroscopic element has been also known (refer to Patent literature 1).

### Prior Art Literature

### Patent Literature

Patent literature 1
Japanese Patent Kokai No. 2005-308688

### Summary of Invention

### Problem To Be Resolved By Invention

However, for example, in the case where a spectral image with three colors of blue, green, and red is captured in a conventional spectral imaging apparatus as disclosed in Patent literature 1, a distance between the surfaces of an etalon opposite to each other is first controlled so that a peak wavelength is in a wavelength range of blue light and then an image is captured. And, afterward, spectral images are captured in a procedure in which the etalon is operated so as to capture images with green light and red light in turn in the same manner as in capturing an image with blue light. Accordingly, there has been a problem that such a manner of capturing spectral images makes it take long time to capture spectral images when a plurality of spectral images are captured with a plural types of light the wavelengths of which are different from one another.

Also, for example, spectroscopic elements for which an acousto-optic element or a liquid crystal is used have been known as a spectroscopic element different from etalons.

However, light is split into a spectrum through polarization in the spectroscopic elements for which an acousto-optic element or liquid crystal is used, so that their transmittances are 50% or less and very low as compared with the transmittances of etalons (which are about 90%).

As a result, exposure time necessary for capturing a spectral image using a spectroscopic element for which an acousto-optic element or liquid crystal is used is about two times exposure time necessary for capturing a spectral image using etalons. The second method is a method in which varieties of spectral images are increased.

Accordingly, there has been a problem that a case where an object to be observed changes its state in a short time like living bodies inevitably makes it difficult to analyze spectral information on the object to be observed because a state of the object to be observed inevitably changes in the middle of capturing a plurality of spectral images with the result that the spectral images differ form one another in states of the object to be observed.

The present invention is made in view of such a problem in the prior art. The objective of the present invention is to offer a spectral imaging apparatus by which a plurality of spectral images formed by a plural types of light different from one another in wavelength can be captured in a short time.

### Means To Resolve Problem

In order to achieve the above-described objective, a spectral imaging apparatus according to the present invention, which is provided with a variable wavelength spectroscopic element: transmitting light so that transmitted light is light with a plurality of peak wavelengths in predetermined wavelength ranges; and changing a distance between surfaces of a pair of optical substrates opposite to each other to change the peak wavelengths, is characterized in that the spectral imaging apparatus includes: a light splitting unit which splits light transmitted by the variable wavelength spectroscopic element into components in each of the predetermined wavelength ranges; and image-capturing units each of which captures only a spectral image formed by the components in each of the wavelength ranges into which the light transmitted by the variable wavelength spectroscopic element is split by the light splitting unit, the wavelength ranges including the peak wavelengths respectively, and in that the image-capturing units capture images respectively and simultaneously.

Also, a spectral imaging apparatus according to the present invention is characterized in that the light splitting unit includes: an optical path splitting member arranged on an optical path of light transmitted by the variable wavelength spectroscopic element; and band-pass filters arranged on optical paths of components into which the light transmitted by the variable wavelength spectroscopic element is split by the optical path splitting member, respectively, the band-pass filters differing from one another in transmission wavelength range.

Also, a spectral imaging apparatus according to the present invention is characterized in that the light splitting unit can change widths of wavelength ranges with which the light splitting unit splits light transmitted by the variable wavelength spectroscopic element into components.

Also, a spectral imaging apparatus according to the present invention, which is provided with a variable wavelength spectroscopic element: transmitting light so that transmitted light is light with a plurality of peak wavelengths in predetermined wavelength ranges; and changing a distance between the surfaces of a pair of optical substrates opposite to each other to change the peak wavelengths, is characterized in that the spectral imaging apparatus includes a color CCD which includes a plurality of groups of pixels, the groups of pixels differing from one another in wavelength range of light with which image information is acquired, and in that the groups of pixels acquire image information from light with the peak wavelengths in the wavelength ranges respectively and simultaneously.

### Advantageous Effects of Inventions

According to the present invention, it is possible to offer a spectral imaging apparatus by which a plurality of spectral images can be captured with plural types of light that are different from one another in wavelength in a short time.

### Brief Description of Drawings

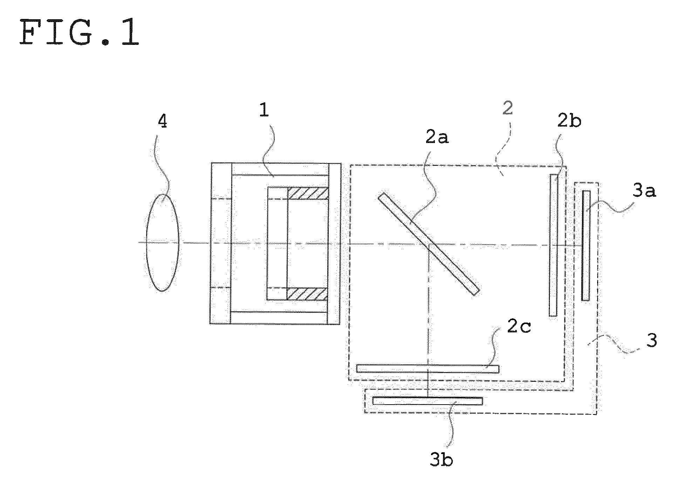

[Fig. 1] Fig. 1 is a schematic view showing a configuration of a spectral imaging apparatus according to the embodiment 1.

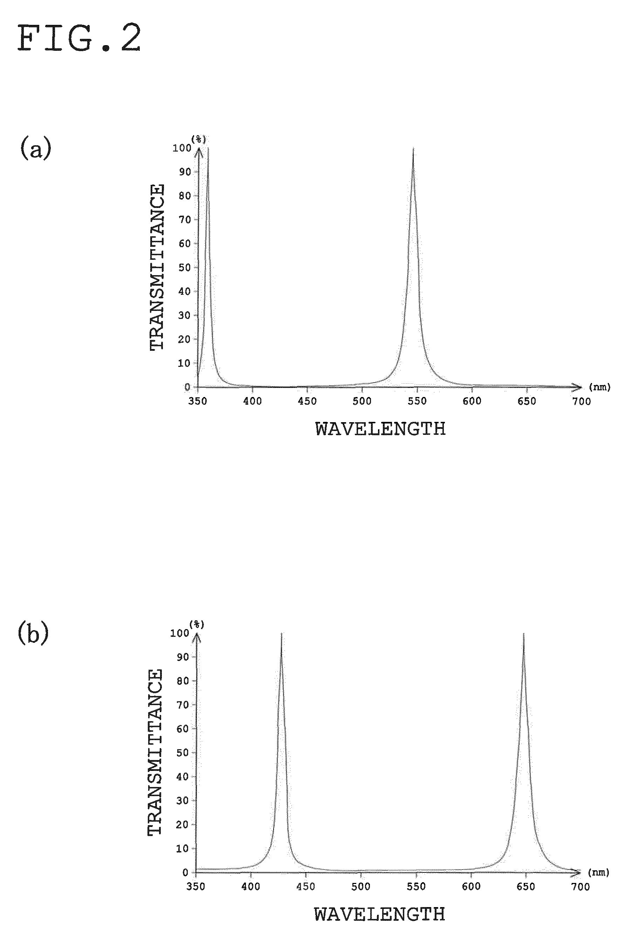

[Fig. 2] Fig. 2 is a characteristic chart showing transmittance characteristics of an etalon for the spectral imaging apparatus shown in Fig. 1, (a) in Fig. 2 shows transmittance characteristics in its first imaging state, and (b) in Fig. 2 shows transmittance characteristics in its second imaging state.

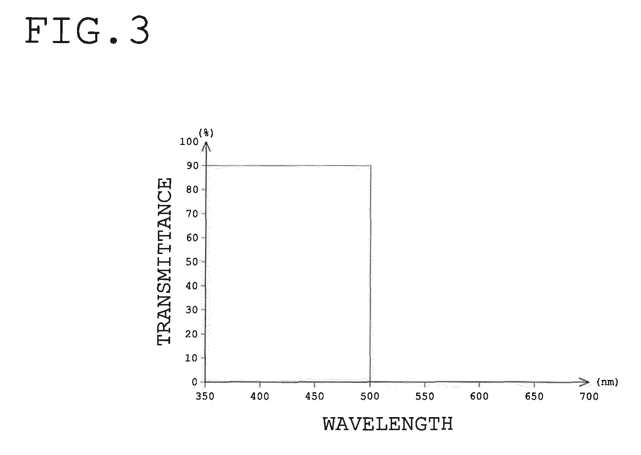

[Fig. 3] Fig. 3 is a characteristic chart showing transmittance characteristics of a dichroic mirror for the spectral imaging apparatus shown in Fig. 1.

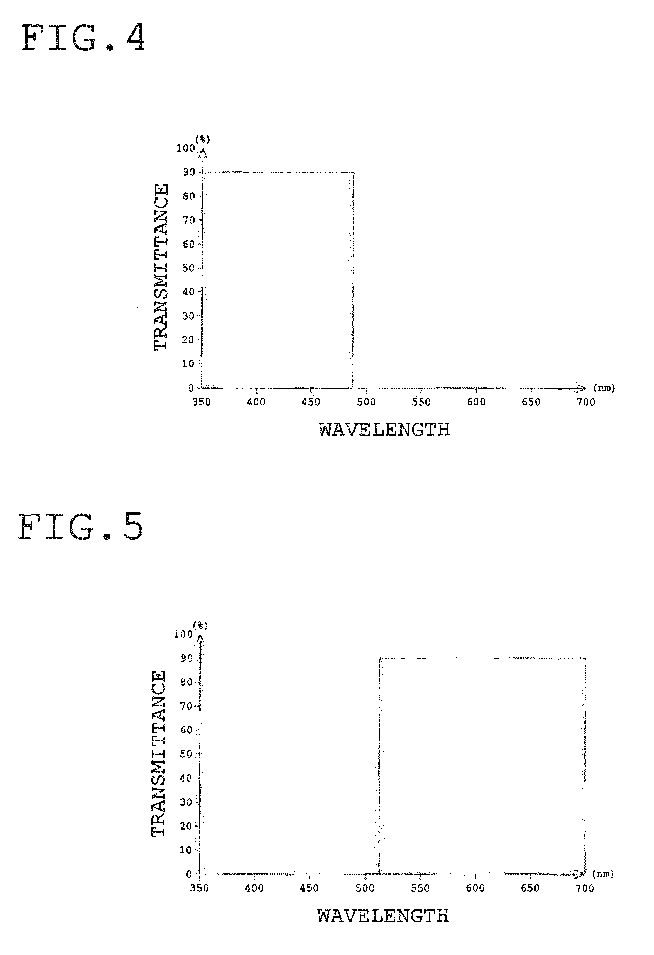

[Fig. 4] Fig. 4 is a characteristic chart showing transmittance characteristics of a first band-pass filter for the spectral imaging apparatus shown in Fig. 1.
[Fig. 5] Fig. 5 is a characteristic chart showing transmittance characteristics of a second band-pass filter for the spectral imaging apparatus shown in Fig. 1.

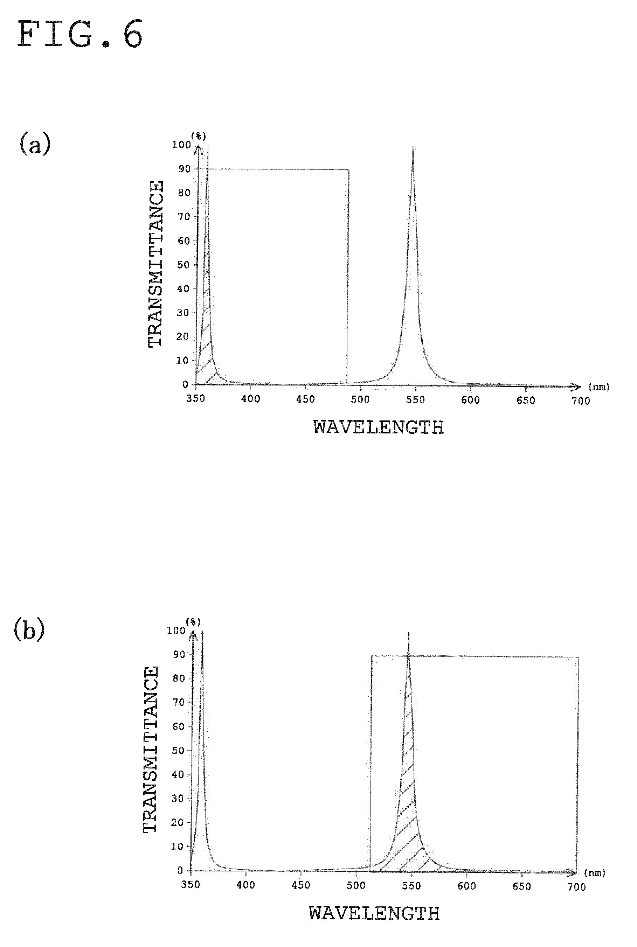

[Fig. 6] Fig. 6 is a characteristic chart showing wavelengths of light captured by the spectral imaging apparatus shown in Fig. 1 in the first imaging state, (a) in Fig. 6 shows wavelengths of light incident on a first image capturing element, and (b) in Fig. 6 shows wavelengths of light incident on a second image capturing element.

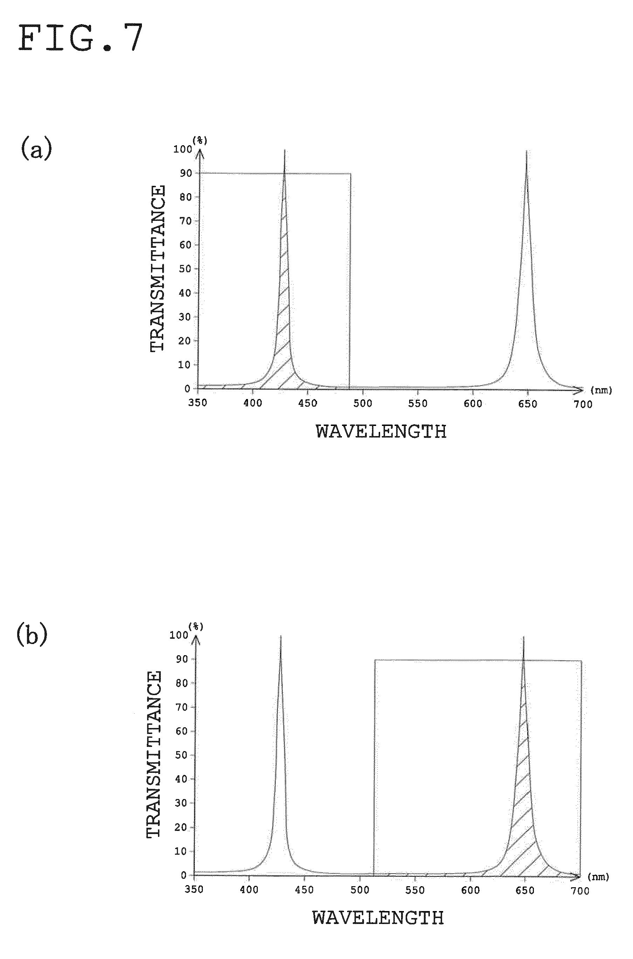

[Fig. 7] Fig. 7 is a characteristic chart showing wavelengths of light captured by the spectral imaging apparatus shown in Fig. 1 in the second imaging state, (a) in Fig. 7 shows wavelengths of light incident on the first image capturing element, and (b) in Fig. 7 shows wavelengths of light incident on the second image capturing element.

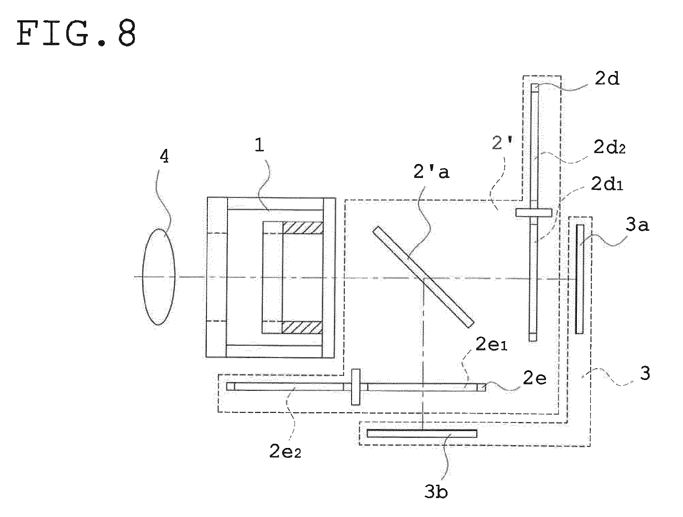

[Fig. 8] Fig. 8 is a schematic view showing a configuration of a spectral imaging apparatus according to the embodiment 2.

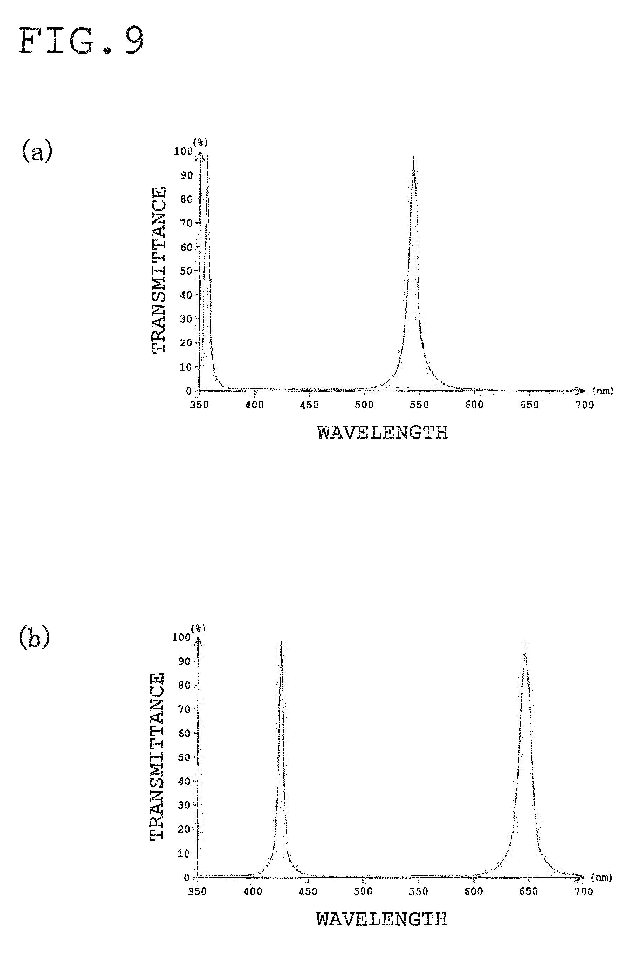

[Fig. 9] Fig. 9 is a characteristic chart showing transmittance characteristics of an etalon for the spectral imaging apparatus shown in Fig. 8 in normal observation, (a) in Fig. 9 shows transmittance characteristics in its first imaging state, and (b) in Fig. 9 shows transmittance characteristics in its second imaging state.

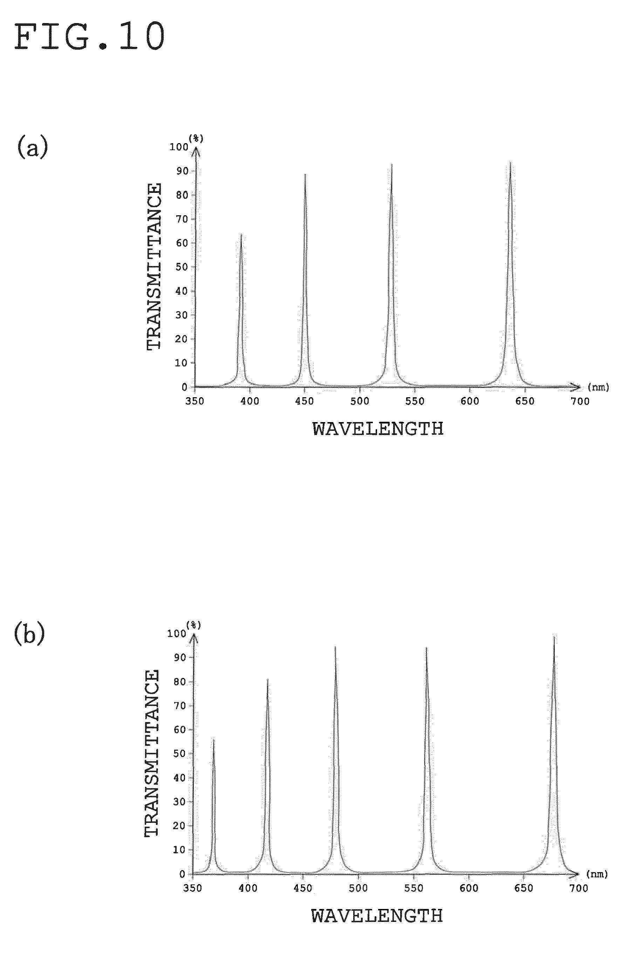

[Fig. 10] Fig. 10 is a characteristic chart showing transmittance characteristics of an etalon for the spectral imaging apparatus shown in Fig. 8 in detailed observation, (a) in Fig. 10 shows transmittance characteristics in the first imaging state, and (b) in Fig. 10 shows transmittance characteristics in the second imaging state.

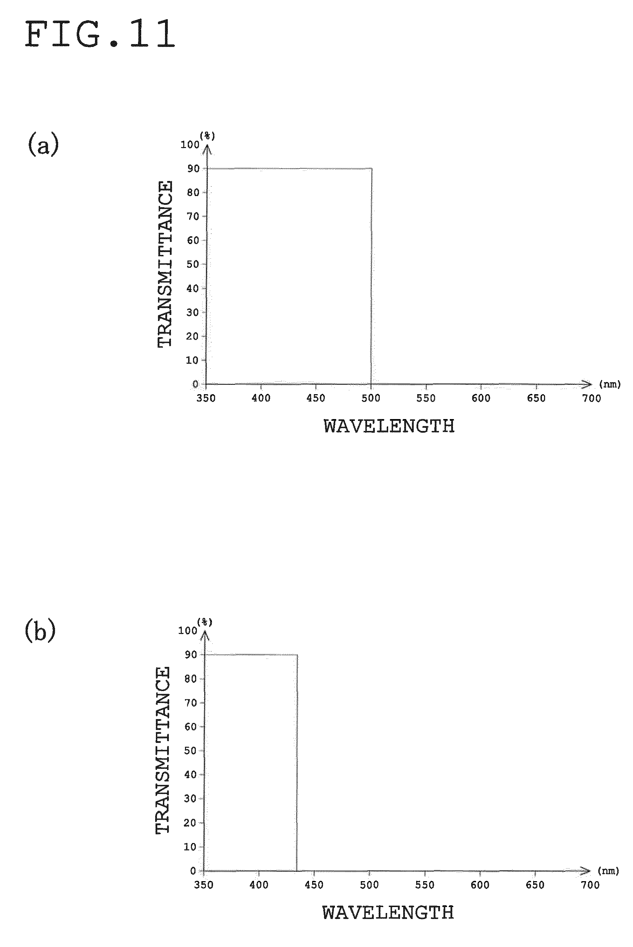

[Fig. 11] Fig. 11 is a characteristic chart showing transmittance characteristics of dichroic mirrors for the spectral imaging apparatus shown in Fig. 8, (a) in Fig. 11 shows transmittance characteristics of a dichroic mirror for normal observation, and (b) in Fig. 11 shows transmittance characteristics of a dichroic mirror for detailed observation.

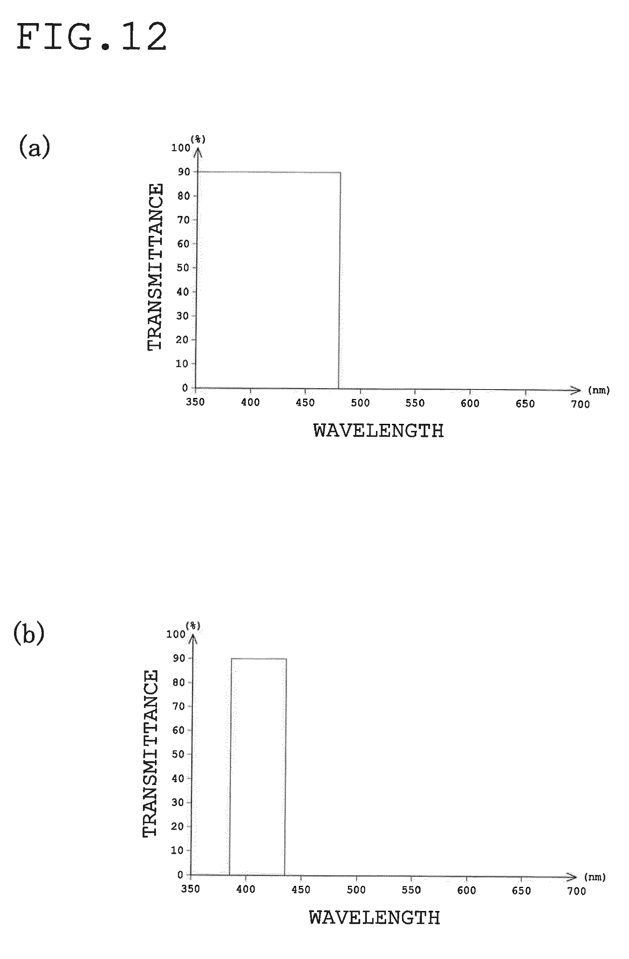

[Fig. 12] Fig. 12 is a characteristic chart showing transmittance characteristics of first band-pass filters for the spectral imaging apparatus shown in Fig. 8, (a) in Fig. 12 shows transmittance characteristics of a first band-pass filter for normal observation, and (b) in Fig. 12 shows transmittance characteristics of a first band-pass filter for detailed observation.

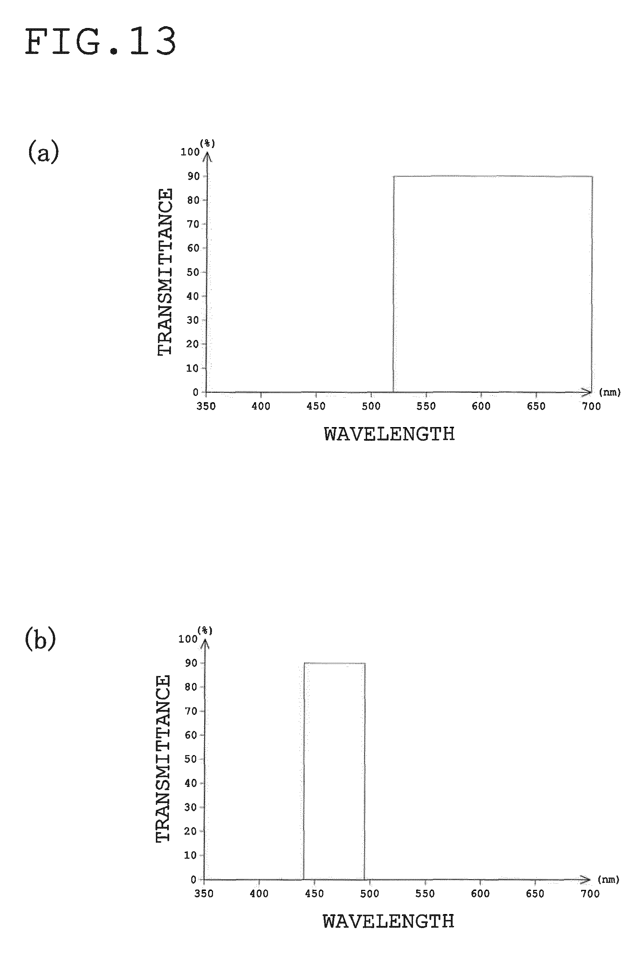

[Fig. 13] Fig. 13 is a characteristic chart showing transmittance characteristics of second band-pass filters for the spectral imaging apparatus shown in Fig. 8, (a) in Fig. 13 shows transmittance characteristics of a second band-pass filter for normal observation, and (b) in Fig. 13 shows transmittance characteristics of a second band-pass filter for detailed observation.

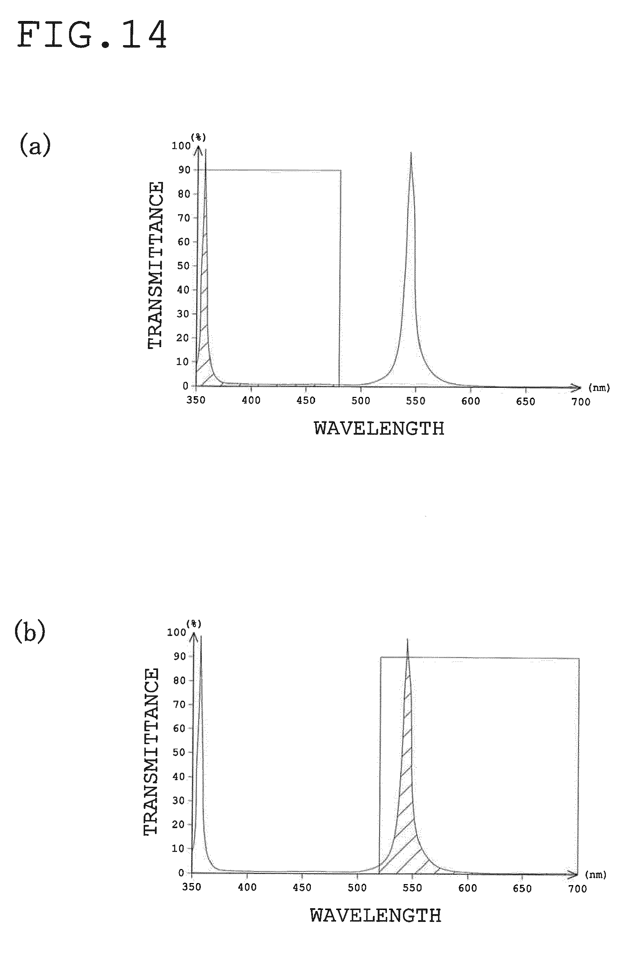

[Fig. 14] Fig. 14 is a characteristic chart showing wavelengths of light captured by the spectral imaging apparatus shown in Fig. 8 in normal observation in the first imaging state, (a) in Fig. 14 shows wavelengths of light incident on a first image capturing element, and (b) Fig. 14 shows wavelengths of light incident on a second image capturing element.

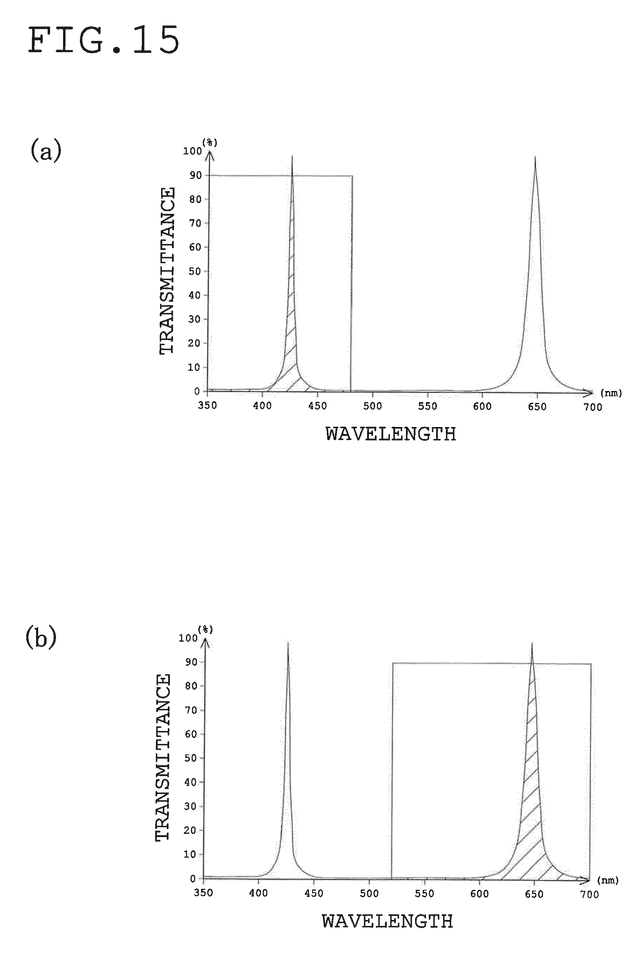

[Fig. 15] Fig. 15 is a characteristic chart showing wavelengths of light captured by the spectral imaging apparatus shown in Fig. 8 in normal observation in the second imaging state, (a) in Fig. 15 shows wavelengths of light incident on the first image capturing element, and (b) in Fig. 15 shows wavelengths of light incident on the second image capturing element.

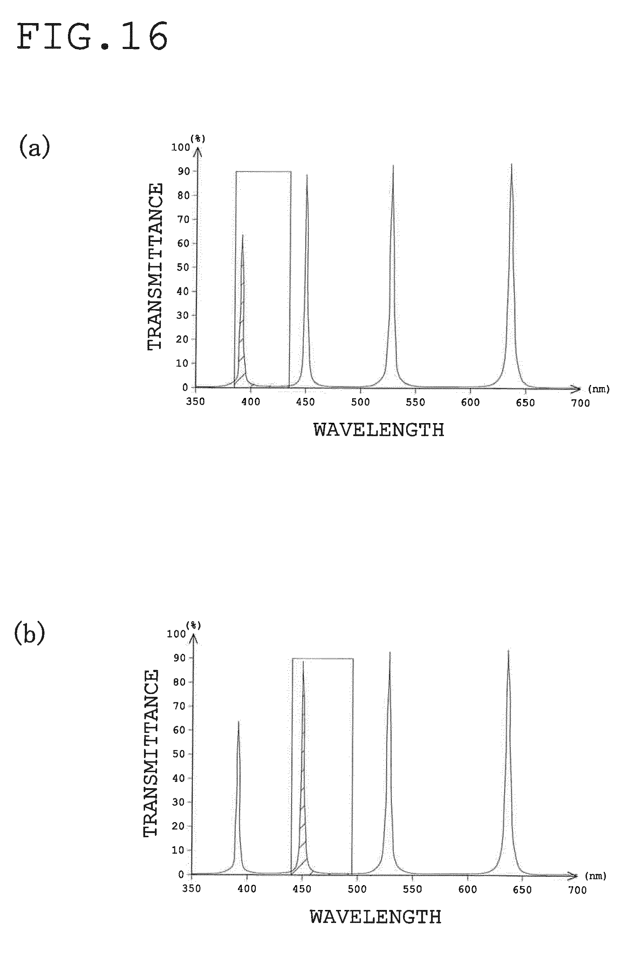

[Fig. 16] Fig. 16 is a characteristic chart showing wavelengths of light captured by the spectral imaging apparatus shown in Fig. 8 in detailed observation in the first imaging state, (a) in Fig. 16 shows wavelengths of light incident on the first image capturing element, and (b) in Fig. 16 shows wavelengths of light incident on the second image capturing element.

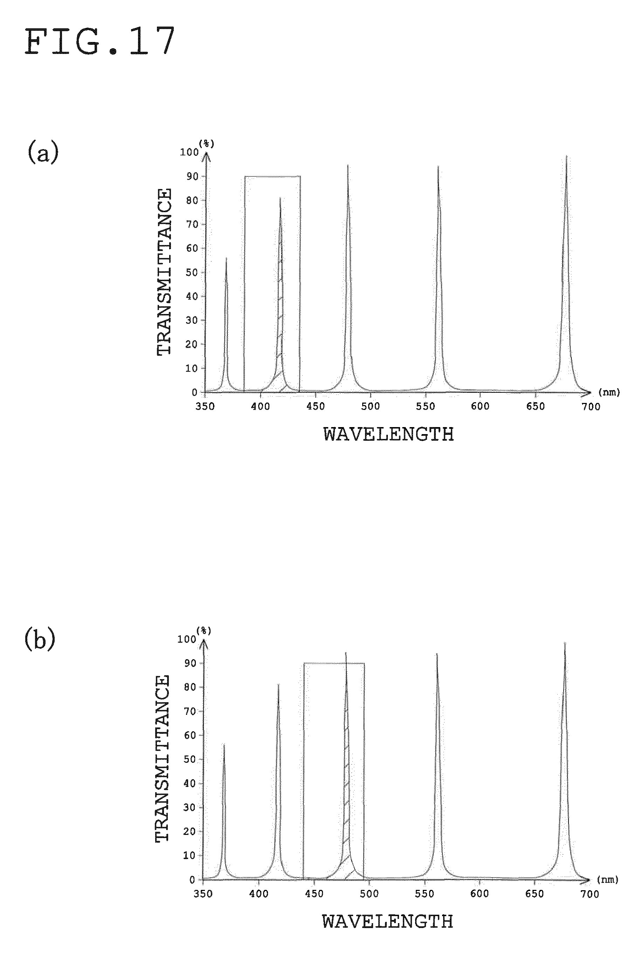

[Fig. 17] Fig. 17 is a characteristic chart showing wavelengths of light captured by the spectral imaging apparatus shown in Fig. 8 in detailed observation in the second imaging state, (a) in Fig. 17 shows wavelengths of light incident on the first image capturing element, and (b) in Fig. 17 shows wavelengths of light incident on the second image capturing element.

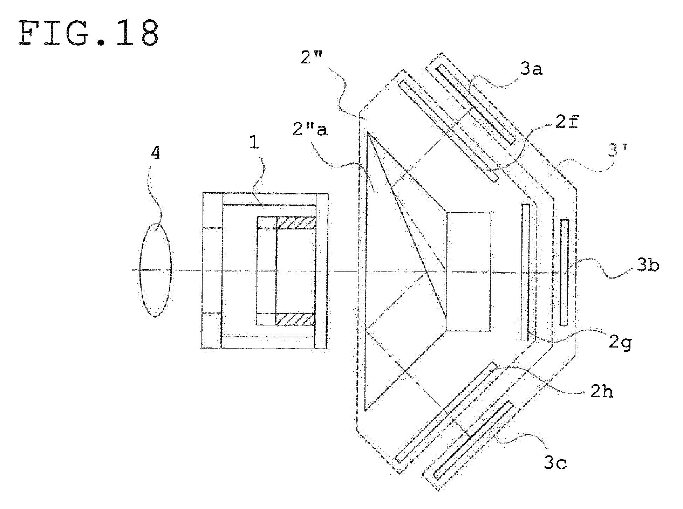

[Fig. 18] Fig. 18 is a schematic view showing a configuration of a spectral imaging apparatus according to the embodiment 3.

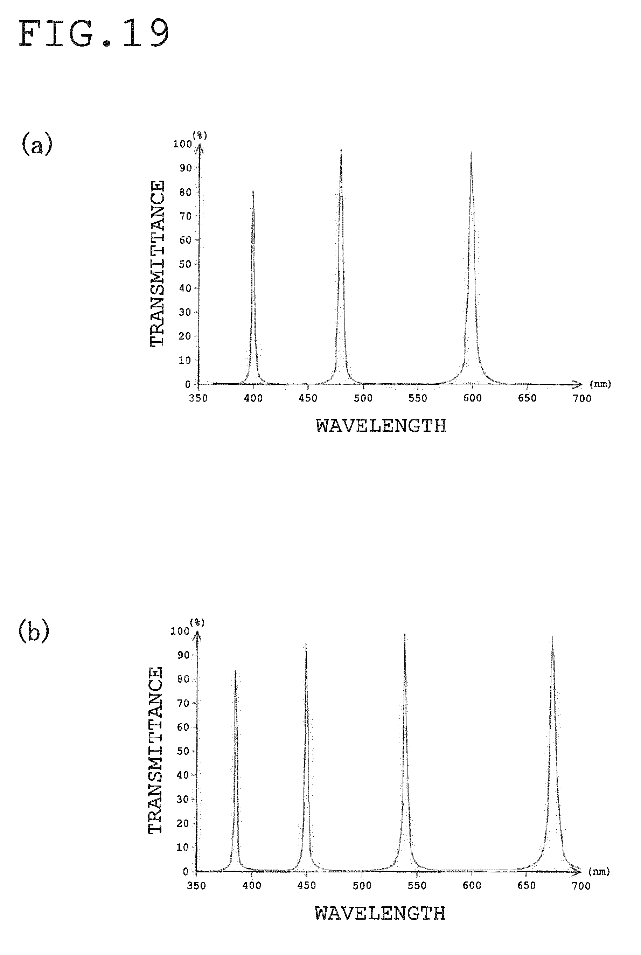

[Fig. 19] Fig. 19 is a characteristic chart showing transmittance characteristics of an etalon for the spectral imaging apparatus shown in Fig. 18, (a) in Fig. 19 shows transmittance characteristics in its first imaging state, and (b) in Fig. 19 shows transmittance characteristics in its second image capture state.

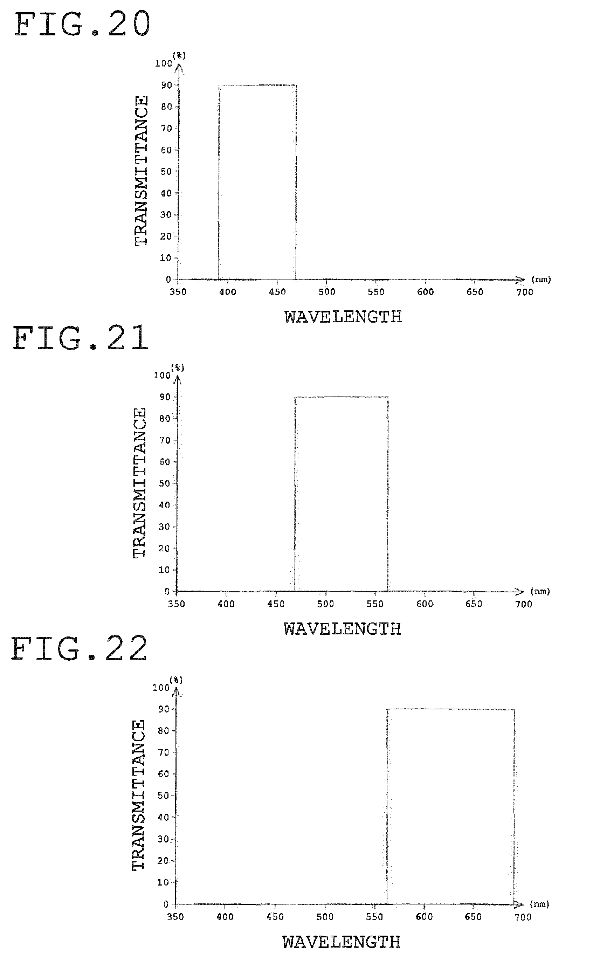

[Fig. 20] Fig. 20 is a characteristic chart showing transmittance characteristics of a first band-pass filter for the spectral imaging apparatus shown in Fig. 18.
[Fig. 21] Fig. 21 is a characteristic chart showing transmittance characteristics of a second band-pass filter for the spectral imaging apparatus shown in Fig. 18.
[Fig. 22] Fig. 22 is a characteristic chart showing transmittance characteristics of a third band-pass filter for the spectral imaging apparatus shown in Fig. 18.

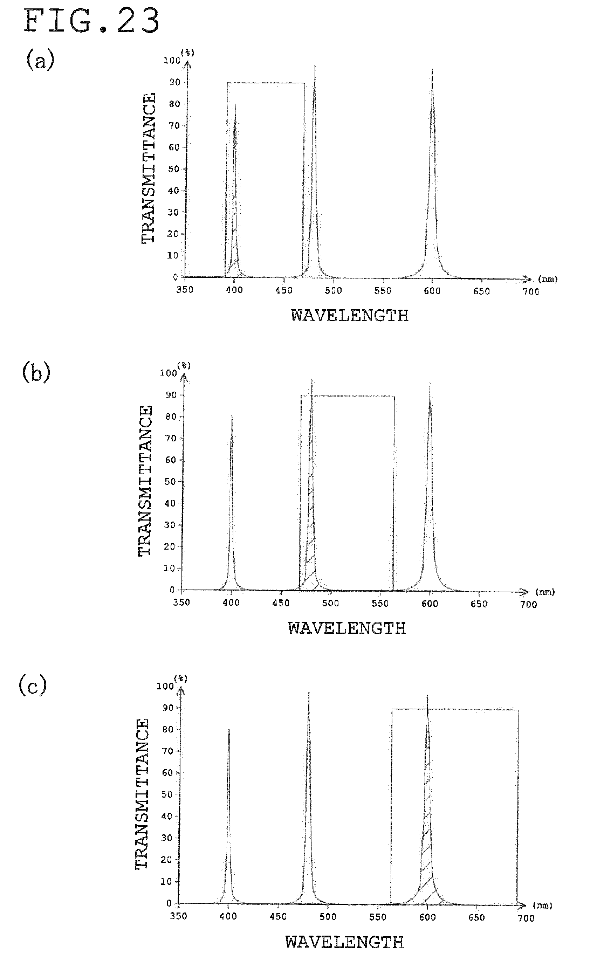

[Fig. 23] Fig. 23 is a characteristic chart showing wavelengths of light captured by the spectral imaging apparatus shown in Fig. 18 in the first imaging state, (a) in Fig. 23 shows wavelengths of light incident on a first image capturing element, (b) in Fig. 23 shows wavelengths of light incident on a second image capturing element, and (c) in Fig. 23 shows wavelengths of light incident on a third image capture element.

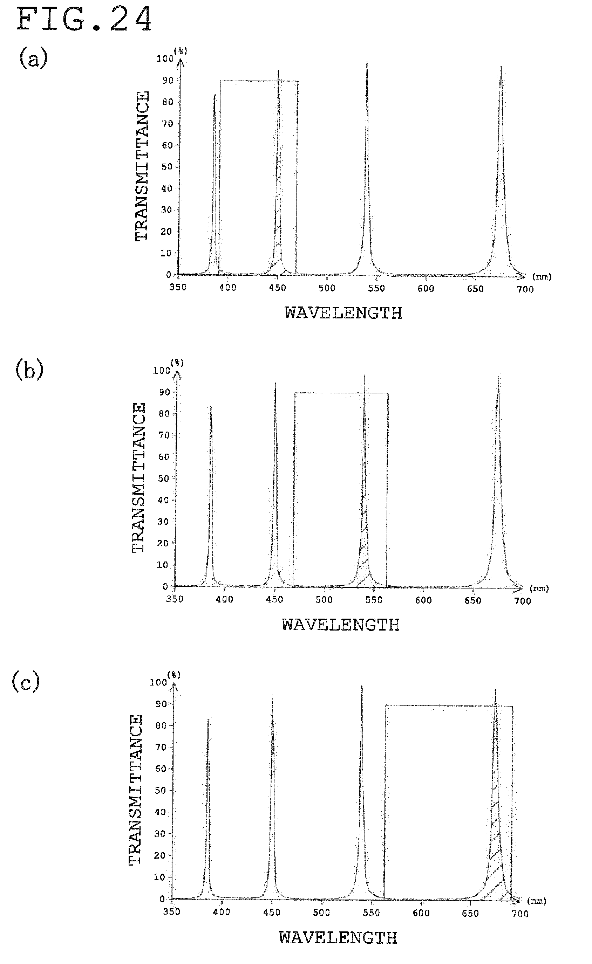

[Fig. 24] Fig. 24 is a characteristic chart showing wavelengths of light captured by the spectral imaging apparatus shown in Fig. 18 in the second imaging state, (a) in Fig. 24 shows wavelengths of light incident on the first image capturing element, (b) in Fig. 24 shows wavelengths of light incident on the second image capturing element, and (c) in Fig. 24 shows wavelengths of light incident on the third image capturing element.

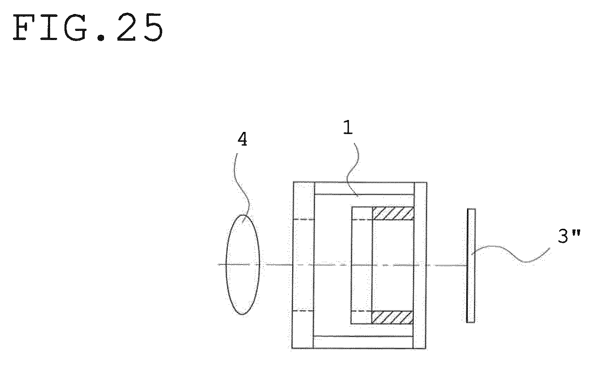

[Fig. 25] Fig. 25 is a schematic view showing a configuration of a spectral imaging apparatus according to the embodiment 4.

### Description of Embodiments

The embodiments of the present invention will be explained in detail below with the drawings referred to.

### [Embodiment 1]

The spectral imaging apparatus according to the embodiment 1 is explained in detail using Figs. 1 to 7.

The configuration of this spectral imaging apparatus is first explained using Figs. 1 to 5.

This spectral imaging apparatus includes: an etalon 1 which is a variable wavelength spectroscopic element; a light splitting unit 2 which splits light transmitted by the etalon 1 into its components in two predetermined wavelength ranges; an image capturing unit 3 which acquires image information on images formed by light emitting from the light splitting unit 2; and an image-forming optical system 4 which leads light from an object to be imaged to the etalon 1, as shown in Fig. 1.

The etalon 1 is formed to operate in such a way that at least one of a pair of optical substrates is moved so that a distance between its surfaces opposite to each other is changed, with the result that it is possible to change its transmittance characteristics into the transmittance characteristics shown in Fig. 2 for example.

The light splitting unit 2 consists of: a dichroic mirror 2a for splitting light of incidence into two light components in wavelength ranges different from each other; a first band-pass filter 2b which is arranged on an optical path of one of the two components into which the light of incidence is split; and a second band-pass filter 2c which is arranged on an optical path of the other of the two components into which the light of incidence is split.

Besides, the dichroic mirror has transmittance characteristics as shown in Fig. 3. The dichroic mirror emits light in a short wavelength range of the two light components into which the light of incidence is split, to the first-band-pass-filter-2b side, and the dichroic mirror emits light in a long wavelength range of the two light components into which the light of incidence is split, to the second-band-pass-filter-2c side.

Also, the first band-pass filter 2b has transmittance characteristics as shown in Fig. 4. In addition, the second band-pass filter 2c has a transmission wavelength range: which is located in a range of longer wavelengths than the transmission wavelength range of the first band pass filter 2b is; and which is wider than the transmission wavelength range of the first band-pass filter 2b, as shown in Fig. 5. The reason why the first and second band-pass filters 2b and 2c are made to have such transmission wavelength ranges is that distances between peak wavelengths (or Free Spectral Range (FSR)) are wider in a long wavelength range than those in a short wavelength range due to the characteristics of the etalon 1.

The image capturing unit 3 consists of: a first image capturing element 3a which is a first image capturing part, the first image capturing part being located on the optical path of one of the light components into which the light is split by the dichroic mirror 2a and being arranged on the image side of the first band-pass filter 2b; and a second image capturing element 3b which is a second image capturing part, the second image capturing part being located on the optical path of the other of the light components into which the light is split by the dichroic mirror 2a and being arranged on the image side of the second band-pass filter 2c. Besides, CCD, CMOS, or the like is used as these image capturing elements.

Next, a method of capturing spectral images using this spectral imaging apparatus is explained using Figs. 1 to 7.

In the case where four images are acquired with light of wavelengths of approximately 360nm, approximately 430nm, approximately 550nm, and approximately 650nm for example, a distance between the surfaces of the etalon 1 opposite to each other is first changed so that the etalon 1 is in a state in which the etalon 1 has transmittance characteristics shown in Fig. 2A (the first imaging state).

In this first imaging state, light incident on the first image capturing element 3a is made to change into light in a wavelength range hatched in Fig. 6A by the transmittance characteristics of the etalon 1 and the transmittance characteristics of the first band-pass filter 2b. On the other hand, light incident on the second image capturing element 3b is made to change into light in a wavelength range hatched in Fig. 6B by the transmittance characteristics of the etalon 1 and the transmittance characteristics of the second band-pass filter 2c.

And, two spectral images are acquired simultaneously through the first and second image capturing elements 3a and 3b in this first imaging state. In this case, the term, "simultaneously" means that timing with which a camera is exposed through the first image-capturing element 3a overlaps with timing with which the camera is exposed through the second image-capturing element 3b, in a certain period of time. Accordingly, there is no necessity that the timing of the exposure through the first image-capturing element 3a should be exactly the same as the timing of the exposure through the second image-capturing element 3b.

Next, a distance between the surfaces of the etalon 1 opposite to each other is changed so that the etalon 1 is in a state in which the etalon 1 has transmittance characteristics shown in Fig. 2B (the second imaging state).

In this second imaging state, light incident on the first image capturing element 3a is made to change into light in a wavelength range hatched in Fig. 7A by the transmittance characteristics of the etalon 1 and the transmittance characteristics of the first band-pass filter. On the other hand, light incident on the second image capturing element 3b is made to change into light in a wavelength range hatched in Fig. 7B by the transmittance characteristics of the etalon 1 and the transmittance characteristics of the second band-pass filter.

And, two spectral images are acquired simultaneously through the first and second image capturing elements 3a and 3b also in the second imaging state as well as in the first imaging state.

As described above, it is possible to capture two spectral images simultaneously in this spectral imaging apparatus. As a result, it is possible to acquire a plurality of spectral images using this spectral imaging apparatus in approximately half as much time as it takes to capture a plurality of spectral images by conventional spectral imaging apparatuses in which a peak wavelength has to be adjusted for each of plural types of light forming spectral images to be acquired and one by one in order to acquire the images.

### [Embodiment 2]

The spectral imaging apparatus according to the embodiment 2 is explained in detail using Figs. 8 to 19.

The configuration of this spectral imaging apparatus is first explained using Figs. 8 to 13.

This spectral imaging apparatus includes: an etalon 1 which is a variable wavelength spectroscopic element; a light splitting unit 2' which splits light transmitted by the etalon 1 into its components in two predetermined wavelength ranges; an image capturing unit 3 which acquires image information on images formed by light emitting from the light splitting unit 2'; and an image-forming optical system 4 which leads light from an object to be imaged to the etalon 1, as shown in Fig. 8.

The etalon 1 is formed to operate in such a way that at least one of a pair of optical substrates is moved so that a distance between its surfaces opposite to each other is changed, with the result that it is possible to change its transmittance characteristics into transmittance characteristics as shown in Figs. 9 and 10 for example.

The light splitting unit 2' consists of: a switching-type dichroic mirror 2'a for splitting light of incidence into two light components in wavelength ranges different from each other; a first rotary filter 2d which is arranged on an optical path of one of the two light components into which the light of incidence is split by the switching-type dichroic mirror 2'a; and a second rotary filter 2e which is arranged on an optical path of the other of the two light components into which the light of incidence is split by the switching-type dichroic mirror 2'a.

Besides, the switching-type dichroic mirror 2'a includes: a dichroic mirror used for normal observation and having transmittance characteristics as shown in Fig. 11A; and a dichroic mirror used for detailed observation and having transmittance characteristics as shown in Fig. 11B. And, the switching-type dichroic mirror 2'a is formed in such a way that one of the dichroic mirrors can be selectively inserted on the optical path of light emitting from the etalon 1. Light in a short wavelength range of the light components into which the light of incidence is split by the switching-type dichroic mirror 2'a is emitted to the first-band-pass-filter-2b side and light in a long wavelength range of the light components into which the light of incidence is split by the switching-type dichroic mirror 2'a is emitted to the second-band-pass-filter-2c side.

Also, the first rotary filter 2d includes: a first band-pass filter 2d₁ for normal observation which has transmittance characteristics as shown in Fig. 12A; and a first band-pass filter 2d₂ for detailed observation which has transmittance characteristics as shown in Fig. 12B. And, one of the band-pass filters 2d₁ and 2d₂ can be selectively inserted on one optical path from the switching-type dichroic mirror 2'a.

Also, the second rotary filter 2e includes: a second band-pass filter 2e₁ for normal observation which has transmittance characteristics as shown in Fig. 13A; and a second band-pass filter 2e₂ for detailed observation which has transmittance characteristics as shown in Fig. 13B. And, one of the band-pass filters 2e₁ and 2e₂ can be selectively inserted on the other optical path from the switching-type dichroic mirror 2'a.

Besides, the second band-pass filter 2e₁ for normal observation has a transmission wavelength range: which is located in a range of longer wavelengths than the transmission wavelength range of the first band-pass filter 2d₁ for normal observation is; and which is wider than the transmission wavelength range of the first band-pass filter 2d₁ for normal observation. Similarly, the second band-pass filter 2e₂ for detailed observation has a transmission wavelength range: which is located in a range of longer wavelengths than the transmission wavelength range of the first band-pass filter 2d₂ for detailed observation is; and which is wider than the transmission wavelength range of the first band-pass filter 2d₂ for detailed observation.

The image capturing unit 3 consists of: a first image capturing element 3 a which is a first image capturing part, the first image capturing part being located on one of the optical paths of the light components into which the light of incidence is split by the dichroic mirror 2'a and being arranged on the image side of the first rotary filter 2d; and a second image capturing element 3b which is a second image capturing part, the second image capturing part being located on the other of the optical paths of the light components into which the light of incidence is split by the dichroic mirror 2'a and being arranged on the image side of the second rotary filter 2e.

Next, a method of capturing spectral images using this spectral imaging apparatus is explained using Figs. 8 to 17.

In the case where four images are acquired with light of wavelengths of approximately 360nm, approximately 430nm, approximately 550nm, and approximately 650nm for example, it is presumed that an observer acquires a detailed spectral image in a wavelength range around a wavelength of approximately 430nm because the observer confirms that an image formed by the light of a wavelength of approximately 430nm has information which interests the observer.

In such a case, a distance between the surfaces of the etalon 1 opposite to each other is changed first so that the etalon 1 is in a state in which the etalon 1 has transmittance characteristics shown in Fig. 9A (the first imaging state in normal observation).

The switching-type dichroic mirror 2'a is made to change so that the dichroic mirror for normal observation which has transmittance characteristics shown in Fig. 11A is inserted on the optical path, along with the change in distance between the surfaces of the etalon 1. In addition, the first rotary filter 2d is rotated so that the first band-pass filter 2d₁ for normal observation is inserted on the one optical path. On the other hand, the second rotary filter 2e is rotated so that the second band-pass filter 2e₁ for normal observation is inserted on the other optical path.

In this first imaging state in normal observation, light incident on the first image capturing element 3a is made to change into light in a wavelength range hatched in Fig. 14A by the transmittance characteristics of the etalon 1 and the transmittance characteristics of the first band-pass filter 2d₁ for normal observation. On the other hand, light incident on the second image capturing element 3b is made to change into light in a wavelength range hatched in Fig. 14B by the transmittance characteristics of the etalon 1 and the transmittance characteristics of the second band-pass filter 2e₁ for normal observation.

And, two spectral images are acquired simultaneously through the first and second image capturing elements 3a and 3b in this first imaging state in normal observation.

Next, a distance between the surfaces of the etalon 1 opposite to each other is changed so that the etalon 1 is in a state in which the etalon 1 has transmittance characteristics shown in Fig. 9B (the second imaging state in normal observation).

Besides, the switching-type dichroic mirror 2'a, the first rotary filter 2d, and the second rotary filter 2e are not rotated because the switching-type dichroic mirror 2'a, the first rotary filter 2d, and the second rotary filter 2e should be in the same states as their states in the first image-capturing state in normal observation respectively.

In this second imaging state in normal observation, light incident on the first image capturing element 3a is made to change into light in a wavelength range hatched in Fig. 15A by the transmittance characteristics of the etalon 1 and the transmittance characteristics of the first band-pass filter 2d₁ for normal observation. On the other hand, light incident on the second image capturing element 3b is made to change into light in a wavelength range hatched in Fig. 15B by the transmittance characteristics of the etalon 1 and the transmittance characteristics of the second band-pass filter 2e₁ for normal observation.

And, two spectral images are acquired simultaneously through the first and second image capturing elements 3a and 3b also in the second imaging state as well as in the first imaging state.

And, in the case where the spectral image formed by light in the wavelength range around 430nm includes information which interests the observer, the distance between the surfaces of etalon 1 opposite to each other is next changed so that the etalon 1 is in a state in which the etalon 1 has transmittance characteristics shown in Fig. 10A (the first imaging state in detailed observation).

The switching-type dichroic mirror 2'a is made to change so that the dichroic mirror for detailed observation which has transmittance characteristics shown in Fig. 11B is inserted on the optical path, along with the change in distance between the surfaces of the etalon 1. In addition, the first rotary filter 2d is rotated so that the first band-pass filter 2d₂ for detailed observation is inserted on the one optical path. On the other hand, the second rotary filter 2e is rotated so that the second band-pass filter 2e₂ for detailed observation is inserted on the other optical path.

In this first imaging state in detailed observation, light incident on the first image capturing element 3a is made to change into light in a wavelength range hatched in Fig. 16A by the transmittance characteristics of the etalon 1 and the transmittance characteristics of the first band-pass filter 2d₂ for detailed observation. On the other hand, light incident on the second image capturing element 3b is made to change into light in a wavelength range hatched in Fig. 16B by the transmittance characteristics of the etalon 1 and the transmittance characteristics of the second band-pass filter 2e₂ for detailed observation.

And, two spectral images are acquired simultaneously through the first and second image capturing elements 3a and 3b in this first imaging state in detailed observation.

Next, the distance between the surfaces of the etalon 1 opposite to each other is changed so that the etalon 1 is in a state in which the etalon 1 has transmittance characteristics shown in Fig. 10B (the second imaging state in detailed observation).

Besides, the first rotary filter 2d and the second rotary filter 2e are not rotated because the first rotary filter 2d and the second rotary filter 2e should be in the same states as their states in the first imaging state in detailed observation respectively.

In this second imaging state in detailed observation, light incident on the first image capturing element 3a is made to change into light in a wavelength range hatched in Fig. 17A by the transmittance characteristics of the etalon 1 and the transmittance characteristics of the first band-pass filter 2d₂ for detailed observation. On the other hand, light incident on the second image capturing element 3b is made to change into light in a wavelength range hatched in Fig. 17B by the transmittance characteristics of the etalon 1 and the transmittance characteristics of the second band-pass filter 2e₂ for detailed observation.

And, two spectral images are acquired simultaneously through the first and second image capturing elements 3 a and 3b also in the second imaging state as well as in the first imaging state.

As described above, it is possible to capture two spectral images simultaneously and it is possible to switch widths of light-splitting wavelength ranges for acquiring spectral images, in this spectral imaging apparatus. As a result, the spectral imaging apparatus of the present embodiment makes it possible to acquire detailed spectral images in a short time.

Besides, in the above-described explanation, only a detailed spectral image in the wavelength range around approximately 430nm is captured using this spectral imaging apparatus. However, it is possible to capture detailed spectral images in other wavelength ranges by providing the rotary filers with band-pass filters each of which has a wavelength range around a predetermined wavelength and which are different from one another in transmission wavelength range, respectively, and by providing the switching-type dichroic mirror with a dichroic mirror that splits light of wavelengths around the predetermined wavelengths.

### [Embodiment 3]

The spectral imaging apparatus according to the embodiment 3 is explained in detail using Figs. 18 to 24.

The configuration of this spectral imaging apparatus is first explained using Figs. 18 to 22.

This spectral imaging apparatus includes: an etalon 1 which is a variable wavelength spectroscopic element; a light splitting unit 2" which splits light transmitted by the etalon 1 into its components in three predetermined wavelength ranges; an image capturing unit 3' which acquires image information on images formed by light emitting from the light splitting unit 2"; and an image-forming optical system 4 which leads light from an object to be imaged to the etalon 1, as shown in Fig. 18.

The etalon 1 is formed to operate in such a way that at least one of a pair of optical substrates is moved so that a distance between its surfaces opposite to each other is changed, with the result that it is possible to change its transmission characteristic into transmittance characteristics as shown in Fig. 19 for example.

The light splitting unit 2" consists of: a color splitting prism 2"a for splitting light of incidence into three types of light (B light, G light, and R light) in wavelength ranges different from one another; a first band-pass filter 2f which is arranged on an optical path of first light of the three types of light into which the light of incidence is split; a second band-pass filter 2g which is arranged on an optical path of second light of the three types of light into which the light of incidence is split; and a third band-pass filter 2h which is arranged on an optical path of third light of the three types of light into which the light of incidence is split.

Besides, the B light of three types of light into which the light of incidence is split by the color splitting prism 2 is emitted to the first-band-pass-filter-2f side, the G light of three types of light into which the light of incidence is split by the color splitting prism 2 is emitted to the second-band-pass-filter-2g side, and the R light of three types of light into which the light of incidence is split by the color splitting prism 2 is emitted to the third-band-pass-filter-3c side.

Besides, the first band-pass filter 2f has transmittance characteristics as shown in Fig. 20. Also, the second band-pass filter 2g has a transmission wavelength range: which is located in a range of longer wavelengths than the transmission wavelength range of the first band-pass filter 2f is; and which is wider than the transmission wavelength range of the first band-pass filter 2f, as shown in Fig. 21. In addition, the third band-pass filter 2h has a transmission wavelength range: which is located in a range of longer wavelengths than that the transmittance wavelength range of the first band-pass filter 2g is; and which is wider than the transmittance wavelength range of the first band-pass filter 2g, as shown in Fig. 22.

The image capturing unit 3' consists of: a first image capturing element 3a which is a first image capturing part, the first image capturing part being located on the optical path of the first light of the three types of light into which the light of incidence is split by the color splitting prism 2"a and being arranged on the image side of the first band-pass filter 2f; a second image capturing element 3b which is a second image capturing part, the second image capturing part being located on the optical path of the second light of the three types of light into which the light of incidence is split by the dichroic mirror 2"a and being arranged on the image side of the second band-pass filter 2g; and a third image capturing element 3c which is a third image capturing part, the third image capturing part being located on the optical path of the third light of the three types of light into which the light of incidence is split by the dichroic mirror 2"a and being arranged on the image side of the third band-pass filter 2h.

Next, a method of capturing spectral images using this spectral imaging apparatus is explained using Figs. 18 to 24.

In the case where six images are acquired with light of wavelengths of approximately 400nm, approximately 450nm, approximately 480nm, approximately 540nm, approximately 600nm, and approximately 650nm for example, a distance between the surfaces of the etalon 1 opposite to each other is first changed so that the etalon 1 is in a state in which the etalon 1 has transmittance characteristics shown in Fig. 19A (the first imaging state).

In this first imaging state, light incident on the first image capturing element 3a is made to change into light in a wavelength range hatched in Fig. 23A by the transmittance characteristics of the etalon 1, the color splitting prism 2"a, and the transmittance characteristics of the first band-pass filter 2f. Also, light incident on the second image capturing element 3b is made to change into light in a wavelength range hatched in Fig. 23B by the transmittance characteristics of the etalon 1, the color splitting prism 2"a, and the transmittance characteristics of the second band-pass filter 2g. In addition, light incident on the third image capturing element 3c is made to change into light in a wavelength range hatched in Fig. 23C by the transmittance characteristics of the etalon 1, the color splitting prism 2"a, and the transmittance characteristics of the second band-pass filter 2h.

And, three spectral images are acquired simultaneously through the first, second, and third image capturing elements 3a, 3b, and 3c in this first imaging state.

Next, the distance between the surfaces of the etalon 1 opposite to each other is changed so that the etalon 1 is in a state in which the etalon 1 has transmittance characteristics shown in Fig. 19B (the second imaging state).

In this second imaging state, light incident on the first image capturing element 3a is made to change into light in a wavelength range hatched in Fig. 24A by the transmittance characteristics of the etalon 1, the color splitting prism 2"a, and the transmittance characteristics of the first band-pass filter 2f. Also, light incident on the second image capturing element 3b is made to change into light in a wavelength range hatched in Fig. 24B by the transmittance characteristics of the etalon 1, the color splitting prism 2"a, and the transmittance characteristics of the second band-pass filter 2g. In addition, light incident on the third image capturing element 3c is made to change into light in a wavelength range hatched in Fig. 24C by the transmittance characteristics of the etalon 1, the color splitting prism 2"a, and the transmittance characteristics of the second band-pass filter 2h.

And, three spectral images are acquired simultaneously through the first, second, and third image capturing elements 3a, 3b, and 3c also in the second imaging state as well as in the first imaging state.

As described above, it is possible to capture three spectral images simultaneously in this spectral imaging apparatus. As a result, the spectral imaging apparatus of the present embodiment makes it possible to acquire a plurality of spectral images in a short time.

### [Embodiment 4]

The spectral imaging apparatus according to the present embodiment is explained in detail using Fig. 25.

This spectral imaging apparatus includes: an etalon 1 which is a variable wavelength spectroscopic element; an image capturing unit 3" which acquires image information on images formed by light emitting from the etalon 1; and an image-forming optical system 4 which leads light from an object to be imaged to the etalon 1, as shown in Fig. 25.

The etalon 1 is formed to be capable of moving a pair of optical substrates. And, at least one of the pair of its optical substrates is moved so that a distance between its surfaces opposite to each other is changed, with the result that it is possible to change its transmittance characteristics into transmittance characteristics as shown in Fig. 19 like the etalon 1 of the spectral imaging apparatus of the embodiment 3 for example.

The image capturing unit 3" consists of a color CCD. Specifically, the image capturing unit 3" is a CCD including a color filter. The color filter provided for the image capturing unit 3" has the same transmittance characteristics as the three filters for the embodiment 3 do (refer to Figs. 20, 21, and 22).

As a result, it is possible to capture three spectral images simultaneously in this spectral imaging apparatus as well as the spectral image apparatus of the embodiment 3. In addition, it is possible to make the spectral imaging apparatus of the present embodiment itself as an apparatus having a small size.

Besides, light splitting units for spectral imaging apparatuses according to the present invention are not limited to those for the above-described embodiments. For example, a combination of: a light splitting unit like a half mirror in which differences between spectral components of reflexive light and of transmitted light are small; and a band-pass filter may be made instead of a combination of a dichroic mirror and a band-pass filter, in the present invention.

Also, although four or six images are acquired in order to obtain spectral images in the above-described embodiments, understandably, spectral imaging apparatuses according to the present invention are not limited to apparatuses having such configurations, and only two images may be acquired, five images may be acquired, or seven or more images may be acquired in the present invention.

Also, although the light splitting units split light of incidence into two or three light components in the above-described embodiments, understandably, spectral imaging apparatuses according to the present invention are not limited to apparatuses having such configurations, and light of incidence may be split into four or more light components in the present invention.

### Reference Signs List

- 1: etalon
- 2, 2', 2": light splitting unit
- 2a: dichroic mirror
- 2'a: switching-type dichroic mirror
- 2"a: color splitting prism
- 2b, 2f: first band-pass filter
- 2c, 2g: second band-pass filter
- 2d: first rotary filter
- 2d₁: first band-pass filter for normal observation
- 2d₂: first band-pass filter for detailed observation
- 2e: second rotary filter
- 2e₁: second band-pass filter for normal observation
- 2e₂: second band-pass filter for detailed observation
- 2h: third band-pass filter
- 3, 3', 3": image-capturing unit
- 3a: first image capturing element
- 3b: second image capturing element
- 3c: third image capturing element
- 4: image-forming optical system

## Claims

1. A spectral imaging apparatus, which is provided with a variable wavelength spectroscopic element transmitting light so that transmitted light is light with a plurality of peak wavelengths in predetermined wavelength ranges and changing a distance between surfaces of a pair of optical substrates opposite to each other to change the peak wavelengths, **characterized in that** the spectral imaging apparatus includes
a light splitting unit splitting light transmitted by the variable wavelength spectroscopic element into components in each of the predetermined wavelength ranges, and
image-capturing units each capturing only a spectral image that is formed by the components in each of the wavelength ranges with the peak wavelengths into which the light transmitted by the variable wavelength spectroscopic element is split by the light splitting unit, and
**in that** the image-capturing units captures images respectively and simultaneously.

2. A spectral imaging apparatus according to claim 1, **characterized in that**
the light splitting unit includes
an optical path splitting member arranged on an optical path of light transmitted by the variable wavelength spectroscopic element, and
band-pass filters arranged on optical paths of components into which the light transmitted by the variable wavelength spectroscopic element is split by the optical path splitting member, respectively, the band-pass filters differing from one another in transmission wavelength range.

3. A spectral imaging apparatus according to claim 1 or 2, **characterized in that** the light splitting unit can change widths of wavelength ranges with which the light splitting unit splits light transmitted by the variable wavelength spectroscopic element into components.

4. A spectral imaging apparatus, which is provided with a variable wavelength spectroscopic element transmitting light so that transmitted light is light with a plurality of peak wavelengths in predetermined wavelength ranges and changing a distance between surfaces of a pair of optical substrates opposite to each other to change the peak wavelengths, **characterized in that** the spectral imaging apparatus includes a color CCD that includes a plurality of groups of pixels, the groups of pixels differing from one another in wavelength range of light with which image information is acquired, and
**in that** the groups of pixels acquire image information from light with the peak wavelengths in the wavelength ranges respectively and simultaneously.
